(19) Europäisches Patentamt
European Patent Office
Office européen des brevets

(11) Publication number: **0 059 165**
**B1**

(12) **EUROPEAN PATENT SPECIFICATION**

(45) Date of publication of patent specification: **15.05.85**

(21) Application number: **82810067.7**

(22) Date of filing: **15.02.82**

(51) Int. Cl.$^4$: **D 06 P 3/60,** D 06 P 3/85, C 09 B 69/00, C 09 B 29/00 // C09B31/00, C09B35/02, C09B33/02, C09B33/18

(54) **Method and dyestuffs for dyeing cellulosics and blends thereof without afterwash.**

(30) Priority: **20.02.81 US 236408**

(43) Date of publication of application:
**01.09.82 Bulletin 82/35**

(45) Publication of the grant of the patent:
**15.05.85 Bulletin 85/20**

(84) Designated Contracting States:
**CH DE FR GB LI**

(56) References cited:
**CH-A- 264 165**
**CH-A- 534 765**
**GB-A- 517 023**
**GB-A-1 101 949**
**US-A-3 934 972**
**US-A-3 964 862**

**CHEMICAL ABSTRACTS, vol.81, no.20, November 18, 1974, page 119, abstract no. 122640b, Columbus, Ohio (US),**

(73) Proprietor: **CIBA-GEIGY AG**
**Postfach**
**CH-4002 Basel (CH)**

(72) Inventor: **Dellian, Kurt A.**
**1201 Wakefield Road**
**Greensboro North Carolina 27410 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

Many methods and dyes are known which have been used in the dyeing of cellulosic fibers and blends of these fibers with hydrophobic synthetics such as polyesters. A common drawback of these methods, however, is the need for an afterwash treatment following, for example, padding of the fiber materials. The generally required rinsing and finishing treatments lead to substantial additional costs for the overall dyeing procedure. The afterwash is needed in order to remove unfixed dyestuff.

When an attempt is made to dye materials consisting of cellulosic/synthetic blends, the difficulties encountered are even greater. A number of different methods have been applied, with varying degrees of success. One conventional method is to use a mixture of reactive and disperse dyes to treat the cellulosic and synthetic fibers, respectively. This process requires at least one soaping and rinsing.

An alternative method involves the use of vat dyes or disperse-vat dye mixtures. After a conventional thermosol treatment, the fiber materials are contacted with a chemical bath containing hydrosulfite and alkali to fix the dye onto the cellulosic fibers, with optional steam or dry heat treatment.

This two step method also requires rinsing and soaping for preparation of the final product.

Another proposed method calls for the use of selected disperse dyes in the presence of water and water-miscible solvents such as glycol or polyglycolethers which boil above about 150°C. After padding or printing of the fabric, the goods are dried, whereby the water evaporates and leaves the solvents behind on the fibers; the dyes dissolve in the solvent and then diffuse into the cellulosic fibers. The fiber material is subsequently thermosoled, evaporating the solvent and causing a diffusion of some of the dyestuff into the polyester fibers. The remaining dyestuff is left behind in the cellulosic fibers after evaporation of the solvent.

Still another alternative calls for the use of pigments in conjunction with a binder and an emulsion thickener. No afterwash is needed, but the materials must be cured after printing or padding. They often have a stiff hand and an inferior crock fastness. Some emulsion thickeners are fire hazards and air pollutants.

All of the above methods, and other similar ones which have been proposed, have substantial disadvantages. Most of the known methods for treatment of both cellulosics and blends require either the use of mixtures of dyes, afterwash treatments, or both. These processes, moreover, often require a number of discrete steps, each of which results in additional process and materials costs. Some of the other known one-step methods require the use of additional compositions, with the associated technical complicatons and additional costs. Other defects common in the art include difficulty in tone-in-tone adjustment, inability to achieve a broad spectrum of colors, inferior color fastness, poor hand and uneconomic fixation. A process for the printing of fully synthetic and semisynthetic fibre materials wherein the aftertreatment consists only of a heating step is known from GB—A—1.101.949.

It is therefore an object of this invention to provide a method for the dyeing of cellulosics and cellulosic-synthetic blends which can be carried out without the need for conventional afterwash treatments. It is also an object of the invention to provide a method for dyeing of cellulosic-synthetic blends without the need for multiple steps or mixtures of different classes of dyes. It is still another object of the invention to provide an economically attractive method for application and fixation of dyestuff to cellulosics and blends. It is an additional object of the invention to provide novel dyes suitable for carrying out the inventive process.

These and other objects are achieved through a process in which cellulosic or cellulosic-synthetic blend fiber material is padded or printed with an alkaline composition containing at least one dyestuff of the formula

$$A—[(NH)_m—(CR_1R_2)_n—B]_p$$

wherein A is an organic dyestuff residue; $R_1$ and $R_2$, each independently of the other, are H or $C_1$—$C_4$ alkyl; m is 0 or 1; n is 0, 1 or 2; p is 1, 2, or 3; B is a glycidic acid

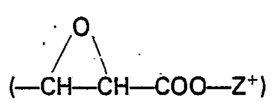

group or a group $—Y—(CR_3R_4)—COO^-Z^+$ in which Y is CO or $SO_2$, $R_3$ is H, $C_1$—$C_4$ alkyl or a carboxylate group, $R_4$ is H or $C_1$—$C_4$ alkyl, and Z is an ammonium or alkali metal cation; and subsequently subjecting the padded or printed material to a conventional thermosol treatment, i.e., dry heating at a temperature between 160—225°C over a period of 5—120 seconds. A preferred temperature range for thermosol treatment is between 202—218°C.

A represents an organic colorant radical which can be used in pigments or dyestuffs. These include azo, triphenylmethane, anthraquinone, stilbene, indigoid, thioindigoid and phthalocyanine residues. For the dyeing or printing of cellulosic fibers alone, the core of the dyestuff is generally a water-insoluble dye. When in addition synthetic fibers in a blend are to be dyed, the colorant radical after decarboxylation should have the properties of a disperse dye molecule.

A further object of this invention are novel dyes of the formula

$$A—[(NH)_m—(CR_1R_2)_n—B]_p$$

wherein A is an organic dyestuff residue; $R_1$ and $R_2$, each independently of the other, are H or $C_1$—$C_4$ alkyl; m is 0 or 1; n is 0, 1 or 2; p is 1, 2, or 3; B is a glycidic acid

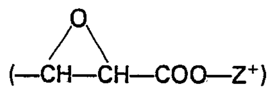

group or a group $—SO_2—(CR_3R_4)—COO^-Z^+$ in which $R_3$ is H, $C_1$—$C_4$ alkyl or a carboxylate group, $R_4$ is H or $C_1$—$C_4$ alkyl, and Z is an ammonium or alkali metal cation.

Of particular interest are those novel dyes in which A represents an azo dyestuff radical. Especially suitable for use in the novel dyeing process are those dyestuffs of the general formula

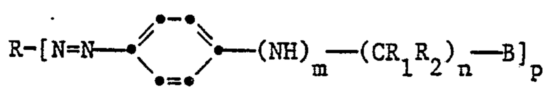

wherein R is an optionally substituted aryl radical free of permanently solubilizing groups and containing at least one —OH or $—NH_2$ group; $R_1$ and $R_2$, each independently of the other, are hydrogen or $C_1$—$C_4$ alkyl; Z is an alkali metal or ammonium cation; B is a glycidic acid

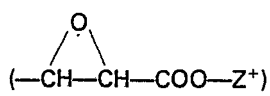

group or $—SO_2(CR_3R_4)—COO^-Z^+$ wherein $R_3$ is H, $C_1$—$C_4$ alkyl or a carboxylate group and $R_4$ is H or $C_1$—$C_4$ alkyl; m is 0 or 1, n is 0, 1 or 2 and p is 1, 2 or 3. As R, phenyl and naphthyl are the preferred aryl radicals.

The radical R may bear a wide variety of substituents, provided that the radical is free of permanently solubilizing groups, such as sulfonic acid groups. Suitable substituents include amino, hydroxy, alkyl and alkoxy, each of 1—4 carbon atoms, carboxy, nitro, $C_1$—$C_3$—alkylcarbonyl, and benzamido optionally substituted in the aryl residue by one or more lower alkyl and/or lower alkoxy groups.

The dyestuffs used in the inventive process are characterized by a CO or $SO_2$ group in the beta-position to a terminal carboxyl group. The inductive effects of these electron-withdrawing groups facilitate a pyrolytic decarboxylation at elevated temperatures. The same properties are also attributed to the glycidic acid group

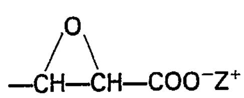

which is a tautomer to $—CO—CH_2—COO^-Z^+$.

It is this propensity to decarboxylate which leads to the significant advances in the dyeing art achieved through the novel process. In general, the dyeing process is begun by printing or padding the material with the water-soluble form of the novel dyes, i.e. the ammonium or alkali metal salts. After the dyes are applied to the material, they are transformed into the water-insoluble form through thermal decarboxylation. The chemical constitution of these dyes allows for a change of solubility properties through a simple heating of the treated material, e.g. thermosol treatment.

This change in solubility properties allows for technically simple dyeing of cellulosic fiber materials without the need for an afterwash treatment. Moreover, the said dyes make it possible to dye mixtures of cellulosic and synthetic fibers with a single class of dyestuff molecule. In general, the dissolved dye first permeates the cellulosic fibers during the padding or printing process. Upon subjection to the thermosol treatment, the molecule decarboxylates, rendering the dye insoluble and physically trapped in the cellulosic fibers. The decarboxylated dye on or near the polyester fiber behaves as a disperse dye, and sublimes and diffuses into the polyester. At this point, both fiber types are dyed with the same type of molecule.

The inventive method and the inventive dyestuffs are suitable for use with a broad range of fiber types. Cellulosics include cotton and viscose. Synthetics, such as polyesters, polyamides and polypropylenes, particularly in blends with cellulosics, are also suitable for treatment with the said dyes according to the novel method.

The thermosol treatment is carried out according to the conventional method. The padded or printed goods are submitted to dry heat at a temperature between 160—225°C over a period of 5—120 seconds.

Application of the dyestuff to the fiber materials is effected either by padding from a dyebase to which a conventional antimigrant is added, or printing with printing paste consisting of dyestuff and a thickener as commonly used for printing. Thickeners of very low solid content as described in US—A—4,095,942 are preferred. Materials suitable for treatment according to the inventive method include a wide range of textile products, including e.g. shaped articles such as fibers, yarns and piece goods thereof, as well as fabrics.

The inventive compounds may be prepared through a wide variety of known methods. The introduction of a sulfonacetic group may be carried out via sulfonylchloride-sulfinic acid followed by reaction with a monochloroacetate (R. Otto, Chem. Berichte *18*: 154—162 (1885); Alan A. Goldberg and Donald M. Besley, J. Chem. Soc. (1945) 566—570).

The introduction of a carbonylacetic group may be effected through the use of malonic acid (Landsteiner, van der Scheer, J. exp. Med. *56*: 399 (1932)) or ethylmalonylchloride. Alternatively, ethyl p-nitrobenzoylacetate can be used as an intermediate for the formation of the novel azo dyes (W. H. Perkin, and Gustav Belenot, J. Chem. Soc., *49*: 440—453 1886)). After reduction of the nitro group, for example by using a Parr hydrogenator and a palladium catalyst, the amine is capable of diazotization and coupling. The same reduction process is applicable to p-nitrophenylglycidic acid ester (A. Lipp, Chem. Ber. *19*: 2643—2650 (1886); L. Claisen, Chem. Ber. *38*: 693—719 (1905)). Hydrolysis of the esters is carried out in a conventional manner.

Example 1

*Dye Syntheses through Ethyl Malonyl Chloride*

13.8 g of p-nitroaniline and 10.1 g triethanolamine are dissolved in 200 ml anhydrous ether. Within 15 min., 16.7 g of ethylmalonylchloride diluted in 50 ml ether is added with stirring. The malonyl nitroanilide separates as an amber oily substance, turning into a powdery yellow-orange precipitate. The precipitate is filtered and washed with enough HCl conc. to clear it from p-nitroaniline.

A solution containing 2.08 g of palladium chloride, $PdCl_2$, and 2.60 ml of concentrated hydrochloric acid dissolved in 20 ml of water is heated to near the boil in a 500 ml beaker on a steam bath. This mixture is then poured into a solution of 67.5 g of sodium acetate trihydrate dissolved in 250 ml of water contained in a half-liter reduction bottle. To this solution is added 22.5 g of carbon (Norit®) which had been previously washed in nitric acid. The preparation of the catalyst is carried out in a Parr shaker type hydrogenator at room temperature.

Upon completion of the reduction, as indicated by cessation of hydrogen absorption, the material is collected on a Buchner funnel. The wet catalyst is immediately washed with five 200 ml portions of water. The wet catalyst is placed in a porcelain plate and allowed to air-dry. The plate is then placed in a vacuum desiccator over calcium chloride. The dried powder catalyst is stored in a tightly closed bottle.

Into a 500 ml reduction bottle are placed 2.0 g of the intermediate and 250 ml of alcohol. Ten percent of the prepared catalyst (0.2 g) is added to the reduction bottle, and the intermediate is hydrogenated over a twenty-minute period. After removal of the catalyst, 250 ml of alcohol is added.

The solution of the amine intermediate is diluted with 150 ml water. To this solution is added 10 ml of HCl conc. The temperature is brought to 3°C with addition of ice to the reaction mixture. Then 0.7 g sodium nitrite is added as a 30% solution. Meanwhile, 1.5 g 2-naphthol is dissolved in 250 ml water with 10 g of soda ash. To this solution the diazo solution is added with stirring. When coupling is completed, the product is filtered and washed to neutrality, and then dried under vacuum.

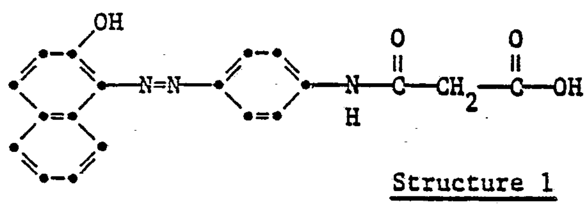

Structure 1

Additional dyes are synthesized used a similar synthetic scheme; however, the malonamic intermediate is hydrolysed in alcoholic KOH to form the free acid intermediate, prior to diazotization and coupling. By doing so, dyes can be synthesized without having to hydrolize each individual dye to convert the dye ester into the dye acid.

The following dyes are prepared in this manner:

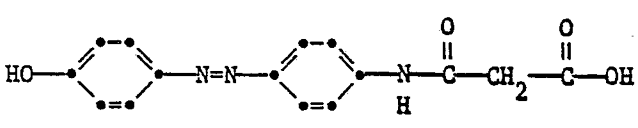

Structure 2

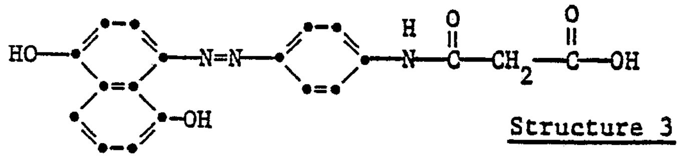

Structure 3

Example 2

*Dye Synthesis Through Ethyl p-Nitrobenzoylacetate*

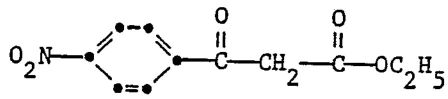

By reducing the nitro group on this compound, the resulting amine

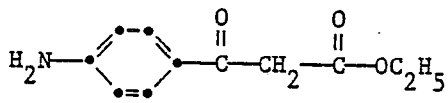

is capable of diazotization and coupling to form new dyes. The nitro compound was reduced in the Parr hydrogenator as previously described.

Normal diazotization and coupling reactions followed by ester hydrolysis were performed to synthesize the following new dye compounds.

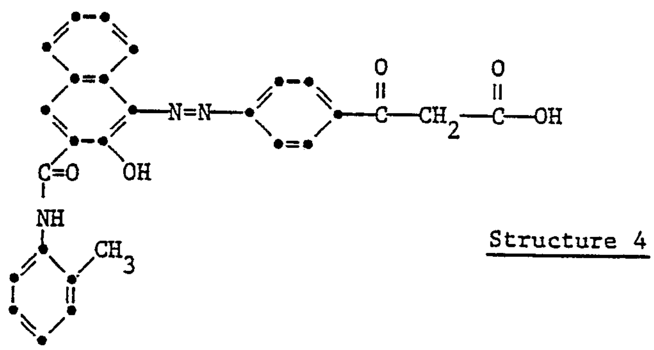

Structure 4

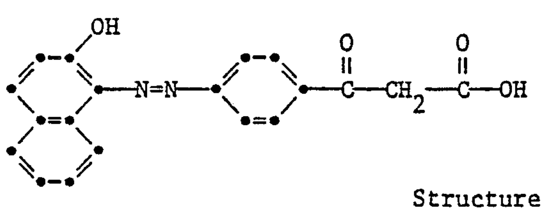

Structure 5

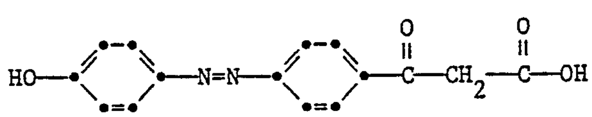

Structure 6

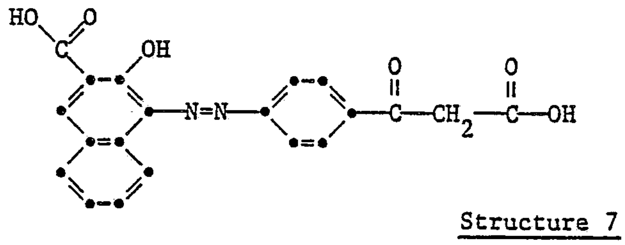

Structure 7

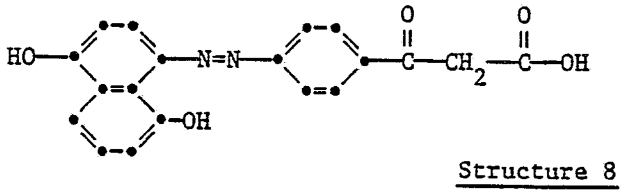

Structure 8

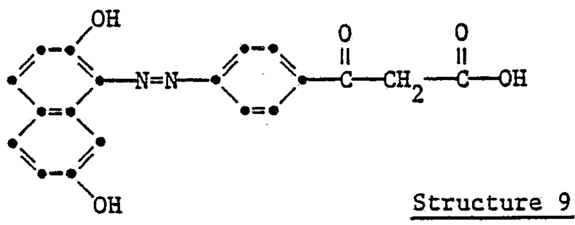

Structure 9

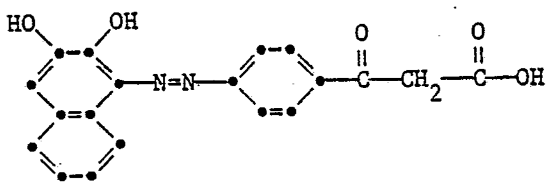

Structure 10

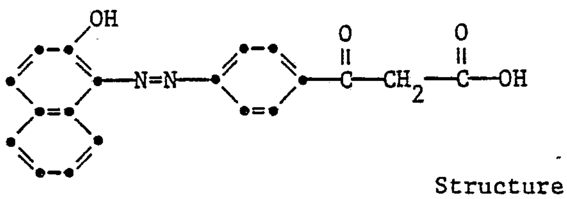

Structure 11

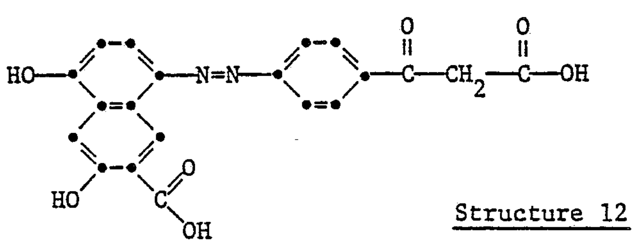

Structure 12

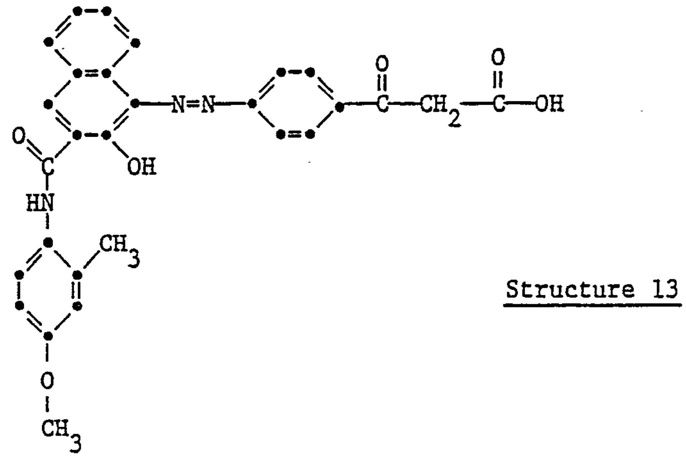

Structure 13

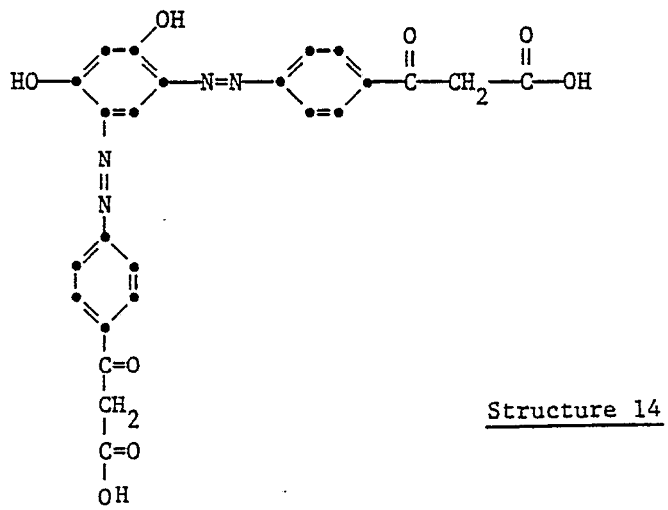

Structure 14

### Example 3

A 50:50 blend of polyester 54/cotton is screen printed with a print paste containing 1% of the following dyestuff

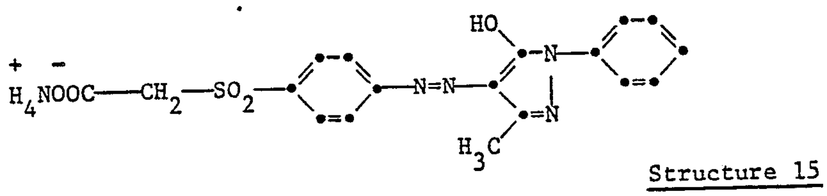

Structure 15

and a 0.3% print paste made from the sodium salt of polyacrylic acid with a molecular weight of 4 million.

The print is dried at 100°C with hot air and submitted to contact head at 225°C. A full yellow shade with good fastness properties is obtained. Both fibers are colored in the same shade.

### Example 4

The same as Example 3 but with a 1.5% dyestuff paste of the following constitution

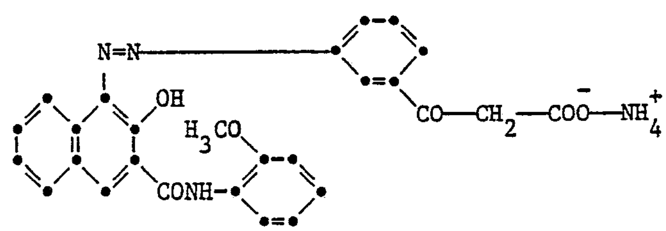

Structure 16

Fixation is accomplished by 2 minute hot air framing at 225°C instead of contact heating. A vivid orange is obtained with very good fastness properties on both fibers.

Example 5

A 65:35 polyester 54/cotton blend is roller printed with a 1% paste of a dyestuff of the following formula

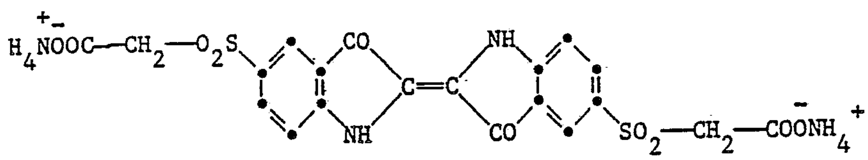

Structure 17

and fixed according to Example 3. A blue shade with overall good fastness properties is obtained.

Example 6

The same as Example 3 but with a dyestuff of the following formula

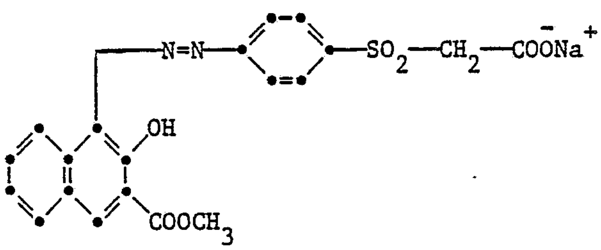

Structure 18

A vivid red shade is obtained with good fastness properties.

Example 7

Mercerized cotton is padded with a dye liquor containing 15 g/l of the following dyestuff

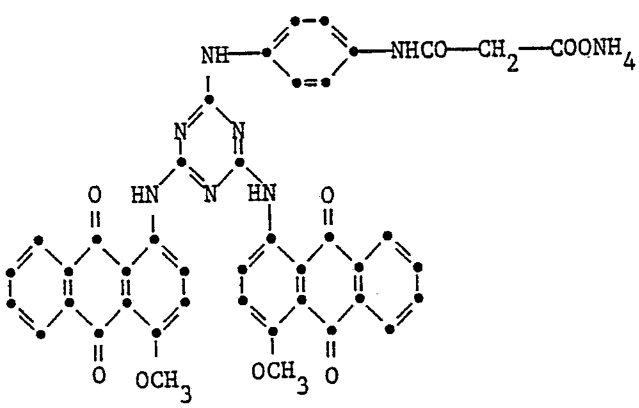

Structure 19

and 0.5 g wetting agent. After drying and curing for 2 minutes at 225°C, the dye is completely fixed without afterwash.

Example 8

Mercerized cotton is screen printed with a print paste of 25 g/kg of the following dyestuff:

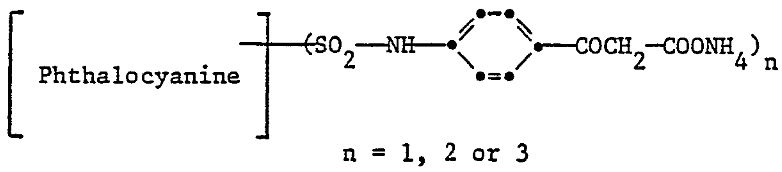

n = 1, 2 or 3

Structure 20

and a thickener of low solid content such as polyacrylate or ethylenemaleic anhydride. After drying and heating to 220°C, the dye is completely fixed without afterwash.

Example 9

A 65:35 blend of polyester/cotton is padded with a 1% solution of the following dyestuff

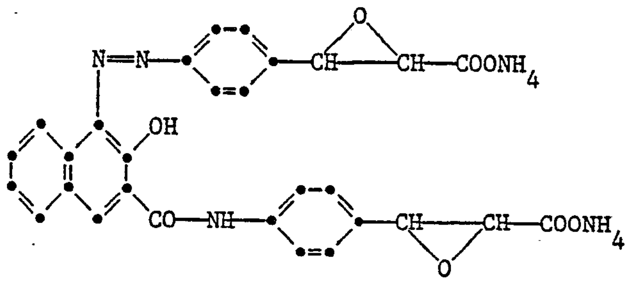

Structure 21

dried and thermosoled 90 sec. at 222°C. Both fibers are dyed in a reddish shade.

**Claims**

1. A process for dyeing cellulosic and cellulosic-synthetic fiber blend material without afterwash comprising padding or printing the material with an alkaline composition containing at least one dyestuff of the formula

$$A—[(NH)_m—(CR_1R_2)_n—B]_p$$

wherein A is an organic dyestuff residue; $R_1$ and $R_2$, each independently of the other, is H or $C_1$—$C_4$ alkyl; B is a glycidic acid group

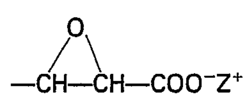

or a group $—Y—(CR_3R_4)—COO^-Z^+$ in which Y is CO or $SO_2$, $R_3$ is H, $C_1$—C4 alkyl or $—COO^-$, $R_4$ is H or $C_1$—$C_4$ alkyl, and Z is an ammonium or alkali metal cation; m is 0 or 1, n is 0, 1 or 2; and p is 1, 2 or 3; and heating the material at a temperature between about 160—225°C over a period of 5—120 seconds.

2. A process as defined in claim 1, wherein said fiber material is a cellulosic.

3. A process as defined in claim 1, wherein said fiber material is a cellulosic-polyester blend.

4. A process as defined in claim 1, wherein said temperature is between 202—218°C.

5. A dyestuff of the formula

$$A—[(NH)_m—(CR_1R_2)_n—B]_p$$

wherein A is an organic dyestuff residue; $R_1$ and $R_2$, each independently of the other, is H or $C_1$—$C_4$ alkyl; B is a glycidic acid group

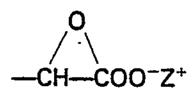

or a group $-SO_2-(CR_3R_4)-COO^-Z_+$ in which $R_3$ is H, $C_1-C_4$ alkyl or $COO^-$, $R_4$ is H or $C_1-C_4$ alkyl and $Z^+$ is an ammonium or alkali metal cation; m is 0 or 1; n is 0, 1 or 2; and p is 1, 2 or 3.

6. A dyestuff as defined in claim 5 of the formula

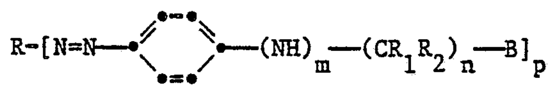

wherein R is an optionally substituted aryl radical containing at least one —OH or $-NH_2$ group.

7. A dyestuff as defined in claim 5, wherein B is a glycidic acid group.

8. A dyestuff as defined in claim 5, wherein B is a group of the formula

$$-SO_2-(CR_3R_4)-COO^-Z^+.$$

9. A dyestuff as defined in claim 7, wherein m is 0 and n is 0.

10. A dyestuff as defined in claim 8, wherein $R_3$ is H and $R_4$ is H.

**Patentansprüche**

1. Verfahren zum Färben von Cellulose und Cellulose-Kunstfaser-Mischungen ohne Nachwaschen, mit den folgenden Schritten:

Klotzen oder Bedrucken des Materials mit einem alkalischen Präparat, welches mindestens einen Farbstoff der Formel

$$A-[(NH)_m-(CR_1R_2)_n-B]_p$$

enthält, worin A der Rest eines organischen Farbstoffes; $R_1$ und $R_2$ unabhängig voneinander H oder $C_1-C_4$-Alkyl; B eine Glycidsäuregruppe

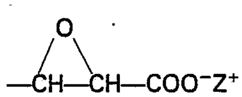

oder eine Gruppe $-Y-(CR_3R_4)-COO^-Z^+$, worin Y CO oder $SO_2$, $R_3$ H, $C_1-C_4$-Alkyl oder $-COO^-$, $R_4$ H oder $C_1-C_4$-Alkyl, und $Z^+$ ein Ammonium- oder Alkalimetall-Kation ist; m = 0 oder 1, n = 0, 1 oder 2, und p = 1, 2 oder 3 ist; und Erhitzen des Materials auf eine Temperatur zwischen etwa 160 und 225°C über eine Dauer von 5 bis 120 Sekunden.

2. Verfahren gemäss Anspruch 1, worin das vorerwähnte Fasermaterial Cellulose ist.

3. Verfahren gemäss Anspruch 1, worin das vorerwähnte Fasermaterial eine Cellulose-Polyester-Mischung ist.

4. Verfahren gemäss Anspruch 1, worin die vorerwähnte Temperatur 202 bis 218°C beträgt.

5. Farbstoff der Formel

$$A-[(NH)_m-(CR_1R_2)_n-B]_p$$

worin A der Rest eines organischen Farbstoffes; $R_1$ und $R_2$ unabhängig voneinander H oder $C_1-C_4$-Alkyl; B eine Glycidsäuregruppe

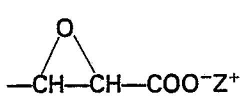

oder eine Gruppe $-SO_2-(CR_3R_4)-COO^-Z^+$, worin $R_3$ H, $C_1-C_4$-Alkyl oder $-COO^-$, $R_4$ H oder $C_1-C_4$-Alkyl, und $Z^+$ ein Ammonium- oder Alkalimetall-Kation ist; m = 0 oder 1, n = 0, 1 oder 2, p = 1, 2 oder 3 ist.

6. Farbstoff gemäss Anspruch 5, der Formel

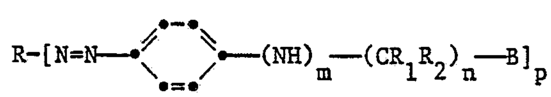

worin R ein gegebenenfalls substituierter Arylrest ist, der mindestens eine —OH oder —$NH_2$ Gruppe enthält.

7. Farbstoff gemäss Anspruch 5, worin B eine Glycidsäuregruppe ist.

8. Farbstoff gemäss Anspruch 5, worin B eine Gruppe der Formel —$SO_2$—$(CR_3R_4)$—$COO^-Z^+$ ist.

9. Farbstoff gemäss Anspruch 7, worin $m_2 = 0$ und $n = 0$ ist.

10. Farbstoff gemäss Anspruch 8, worin $R_3$ H und $R_4$ H ist.

**Revendications**

1. Procédé de teinture de matière en fibres cellulosiques ou en un mélange de fibres cellulosiques et synthétiques sans post-lavage, consistant à foularder ou imprimer la matière avec une composition alcaline contenant au moins un colorant de formule:

$$A—[(NH)_m—(CR_1R_2)_n—B]_p$$

dans laquelle A est un radical de colorant organique; $R_1$ et $R_2$ représentent chacun, indépendamment l'un de l'autre, H ou un radical alkyle en $C_1$—$C_4$; B est un groupe acide glycidique

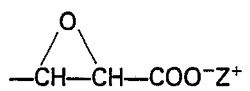

ou un groupe —Y—$(CR_3R_4)$—$COO^-Z^+$ dans lequel Y représente CO, ou $SO_2$; $R_3$ représente H, un radical alkyle en $C_1$—$C_4$ ou —$COO^-$; $R_4$ représente H ou un radical alkyle en $C_1$—$C_4$ et Z représente un cation ammonium ou de métal alcalin; *m* est 0 ou 1, *n* est 0, 1 ou 2, et *p* est 1, 2 ou 3; et à chauffer la matière à une température comprise entre environ 160 et 225°C au cours d'une période de 5 à 120 secondes.

2. Procédé selon la revendication 1, dans lequel ladite matière fibreuse est une matière cellulosique.

3. Procédé selon la revendication 1, dans lequel ladite matière fibreuse est un mélange de fibres cellulosiques et de polyester.

4. Procédé selon la revendication 1, dans lequel ladite température est comprise entre 202 et 218°C.

5. Colorant de formule:

$$A—[(NH)_m—(CR_1R_2)_n—B]_p$$

dans laquelle A est un radical de colorant organique; $R_1$ et $R_2$ représentent chacun indépendamment l'un de l'autre, H ou un radical alkyle en $C_1$—$C_4$; B est un groupe acide glycidique

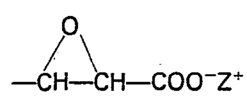

ou un groupe —$SO_2$—$(CR_3R_4)$—$COO^-Z^+$ dans lequel $R_3$ est H, un radical alkyle en $C_1$—$C_4$ ou $COO^-$; $R_4$ représente H ou un radical alkyle en $C_1$—$C_4$, et $Z^+$ est un cation ammonium ou de métal alcalin; *m* est 0 ou 1; *n* est 0, 1 ou 2; et *p* est 1, 2 ou 3.

6. Colorant tel que défini dans la revendication 5, qui répond à la formule:

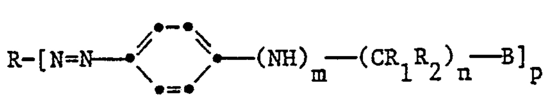

dans laquelle R est un radical aryle facultativement substitué contenant au moins un groupe —OH ou —$NH_2$.

7. Colorant tel que défini dans la revendication 5, dans lequel B est un groupe acide glycidique.

8. Colorant tel que défini dans la revendication 5, dans lequel B est un groupe de formule:

$$—SO_2—(CR_3R_4)—COO^-Z^+.$$

9. Colorant tel que défini dans la revendication 7, dans lequel *m* est 0, et *n* est 0.

10. Colorant tel que défini dans la revendication 8, dans lequel $R_3$ est H, et $R_4$ est H.